# EUROPEAN PATENT APPLICATION

(11) **EP 4 394 077 A1**
(43) Date of publication of application: **03.07.2024**
(21) Application number: 22217262.9
(22) Date of filing: 30.12.2022
(51) Int. Cl.: C22C 38/44, C22C 38/50, C22C 38/02, C22C 38/04, C22C 38/58, C22C 38/00, B23K 35/30, B23K 35/02, B23K 9/20

(54) **STEEL ALLOY, ARTICLE OF MANUFACTURE AND METHOD**

(71) Applicant: Hilti Aktiengesellschaft, 9494 Schaan (LI)
(72) Inventor: Wolf, Iwan, 7204 Untervaz (CH); Elser, Tobias, 6820 Frastanz (AT); Grad, Patrick, 8884 Oberterzen (CH)
(74) Representative: Hilti Aktiengesellschaft Corporate Intellectual Property

(57) **Abstract**

Disclosed are a steel alloy, an article of manufacture made of the steel alloy, and a method for welding a welding stud to a base material.

## Description

### TECHNICAL FIELD

Described herein are steel alloys and articles of manufacture made thereof. Further described is method for welding a welding stud to a base material.

### BACKGROUND ART

In many applications, there is the need to join elements. One such application is joining two elements by welding a fastening element such as a welding stud to a base material such as a steel plate, thereby using a welding gun. A welding current is applied to the welding stud to liquefy a material of the welding stud and the base material. Then, the welding stud is immersed into the liquefied material before it solidifies. One possible material of such a fastening element is steel containing carbon to some extent. An amount of electrical energy used during the welding method as applied to a single welding stud (hereinafter "welding energy") is usually far above 10 kJ, in some applications, however, may be as low as below 3 kJ.

One constraint with steel, particularly if used for welding applications, relates to reduced strength due to embrittlement. Embrittlement may be caused by carbon building brittle areas under some circumstances in the steel, in particular at low welding energies.

Offering an alternative design that addresses some or all of the above constraints or at least offers the public a choice may be useful.

### SUMMARY

Throughout this specification, any indication of a percentage ("%") is to be understood as the fraction of the respective alloying constituent relative to a weight or mass of the overall steel alloy (weight percent).

According to one aspect, the above constraints are addressed by a steel alloy consisting essentially of
0 - 0.08 % carbon,
0 -1 % silicon,
0 - 2 % manganese,
0 - 0.045 % phosphorous,
0 - 0.03 % sulfur,
16 - 20 % chromium,
2.0 - 3.0 % molybdenum,
8 - 14 % nickel,
0 - 0.1 % nitrogen,
0 - 0.7 % titanium,
the balance being iron and impurities, and incidental amounts of residual elements that do not adversely affect the basic and novel properties provided by the alloy.

Too high carbon or sulfur content may lead to undesirable levels of brittle phases e.g. after liquefying the steel such as during a welding method, in particular at low welding energies. In preferred embodiments, the steel alloy contains 0 - 0.03 % carbon and/or 0 - 0.012 % sulfur.

Silicon and titanium have been found to compensate for harmful carbon with respect to brittleness. In preferred embodiments, the steel alloy contains 0.5 - 0.75 % silicon and/or 0.2 - 0.7 % titanium. In another preferred embodiment, the amount of silicon and the amount of titanium add to at least 0.5 %. In an even more preferred embodiment, the amount of silicon and the amount of titanium add to at least 0.5 % more than the amount of carbon.

In other preferred embodiments, the steel alloy contains 16 - 18 % chromium and/ or 2.0 - 2.5 % molybdenum and/or 10 - 14 % nickel.

In a generally preferred embodiment, an article of manufacture, such as a fastening element, or a welding stud, is made from the steel alloy as proposed. The steel alloy may be present in a bulk material of the article, or added as a press-in element or surface layer, such as a coating, to a semi-finished product to produce the article.

In another preferred embodiment, the article of manufacture forms a fastening element, in particular a welding stud.

According to another aspect, a method for welding a welding stud to a base material comprises providing a welding stud made from the steel alloy as proposed, applying a welding current to the welding stud between the welding stud and the base material, partially liquefying a material of the welding stud and/or the base material, allowing the liquefied material of the welding stud and/or of the base material to solidify, and immersing the welding stud into the liquefied material of the welding stud and/or of the base material before the liquid material solidifies.

Samples produced by the material described above showed a very good resistance against carbon-induced cracking particularly of the weld seam that is built after a welding operation. Further, an embedment depth of the welding stud in the base material may be increased with respect to welding studs made of common materials.

### BRIEF DESCRIPTION OF THE DRAWINGS

Further aspects and advantages of the steel alloy, article of manufacture and method for welding will become apparent from the ensuing description that is given by way of example only and with reference to the accompanying drawings in which:
- Fig. 1: schematically shows a welding device,
- Fig. 2: shows a welding stud in a longitudinal sectional view, and
- Fig. 3: shows a welding stud in a longitudinal sectional view.

### DETAILED DESCRIPTION

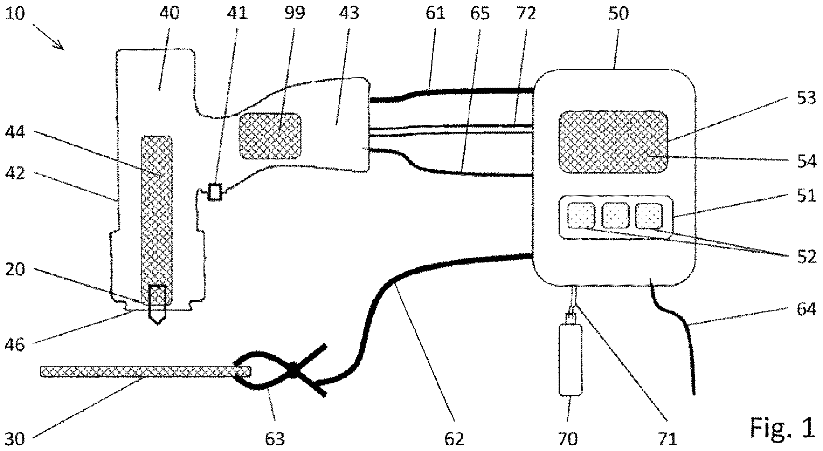

Figure 1 schematically represents a welding device 10 for welding a welding stud 20 to a substrate 30 such as structural steel. A material of the welding stud 20 and a material of the substrate 30 are electrically conductive. The welding device 10 comprises a welding gun 40 with a trigger switch 41, formed as a pushbutton switch, a welding unit 50, a first electric cable 61, a second electric cable 62 with a connection terminal 63, an electric supply cable 64, formed for example as a power cable, an electrical communication line 65, a gas reservoir 70, formed as a gas cylinder, a tubular gas supply line 71 and a gas hose 72. The first cable 61 serves for supplying the welding stud 20 with electric current through the welding unit 50. The second cable 62 serves for electrically connecting the substrate 30 to the welding unit 50 when the connection terminal 63 is clamped to the substrate 30. When the welding stud 20 comes into contact with the substrate 30, a circuit closes, so that welding current, for example in the form of direct current or alternating current, is applied to the welding stud 20 by the welding unit 50. The gas supply line 71 and the gas hose 72 serve for supplying a contact region between the welding stud 20 and the substrate 30 with an inert gas from the gas reservoir 70, in order to protect the contact region from oxidation due to oxygen from a surrounding area during a welding operation. For controlling a gas flow to the contact region, the gas reservoir 70, the gas supply line 71, the welding unit 50, the gas hose 72 or the welding gun 40 comprises a valve, in particular a controllable valve, that is not shown.

The welding unit 50 has an input device 51 with actuating elements 52 and also an output device 53 with a visual display element 54 and a wireless transmission unit. The input device 51 serves for inputting parameters of a welding method to be carried out with the welding device 10, such as for example the electrical voltage, current intensity, power and time duration of the welding current, position and speed of the stud and so on, by a user of the welding device 10. The output device 53 serves for outputting information to the user, such as for example information on parameters of the welding method, information on detected emissions of the welding method or other variables, information on a quality of the welding operation, information on measures for improving the welding operation, information on detected characteristics of the welding stud or information derived from the aforementioned variables, and/or recommendations or instructions for cleaning and/or maintaining the welding device 10, in particular the welding gun 40. The communication line 65 serves for communication between the welding gun 40, in particular a control device of the welding gun 40 that is not shown in Fig. 1, and the welding unit 50, in particular the control unit and/or the input device 51 and/or the output device 53. By means of this communication, for example, an exchange of information about the parameters of a welding operation is accomplished, in order e.g. to achieve or facilitate a synchronization of the welding current with a movement of the welding stud 20.

The welding gun 40 has a housing 42 with an opening 46, from which housing a handle 43 with the trigger switch 41 protrudes. The welding gun 40 also has a stud holder 44, on which the welding stud 20 is held during a welding operation. For this purpose, the stud holder comprises for example two, three, four or more resilient arms that are not shown in detail, between which the welding stud 20 is inserted and held by means of a clamping fit. The welding gun 40 also has, for applying a welding current to the welding stud 20, a welding-current contact element which is integrated in the stud holder 44, for example in the form of one or more of the resilient arms. The welding gun 40 also has a control device 99 for controlling the various components and devices of the welding gun and of the welding unit 50. The control device 99 is intended for controlling one or more parameters of the welding operation. For this purpose, the control device 99 comprises various electronic components, such as for example one or more microprocessors, one or more temporary or permanent data memories, and the like.

The welding gun 40 also has a stud lifting device, which is formed as a first lifting magnet, which acts on the stud holder 44 with a force away from the opening 46 to the rear (upwardly in Fig. 1) when the stud lifting device is activated. Via a signal line that is not shown, the control device 99 communicates with the stud lifting device in order to control the stud lifting device, in particular to activate and deactivate it. The welding gun 40 also has a stud immersing device, formed as a spring element or as a second lifting magnet, which acts on the stud holder 44 forwardly with a force toward the opening 46 (downwardly in Fig. 1) when the stud immersing device is activated. Via a signal line that is not shown, the control device 99 communicates with the stud immersing device in order to control the stud immersing device, in particular to activate and deactivate it. If the stud immersing device takes the form of a spring element, this spring element is preferably tensioned when the stud holder is moved by the stud lifting device to the rear, with the result that the spring element moves the stud holder forward as soon as the stud lifting device is deactivated.

In a welding process with the welding apparatus 10, at first the substrate 30 and the stud 20 are provided. In a further step, information, for example about desired parameters of the following welding operation, are input by a user via the input device. In a further step, a welding current between the welding stud 20 and the substrate 30 is applied to the welding stud 20 by the welding unit 50 by means of the first cable 61 and the second cable 62. In a further step, the welding stud 20 is lifted off the substrate by means of the stud lifting device while maintaining the welding current flowing between the welding stud 20 and the substrate 30, with an arc being formed between the welding stud 20 and the substrate 30. Particularly on account of the heat generated by the arc, a material of the welding stud 20 and/or of the substrate 30 is then partially liquefied. In a further step, the welding stud 20 is immersed by means of the stud immersing device in the liquefied material of the welding stud 20 or of the substrate 30. The liquefied material of the welding stud 20 or of the substrate 30 then solidifies such that the welding stud 20 is connected to the substrate 30 in an integrally bonded manner. An amount of electrical energy used during the welding method as applied to a single welding stud may be as low as below 3 kJ.

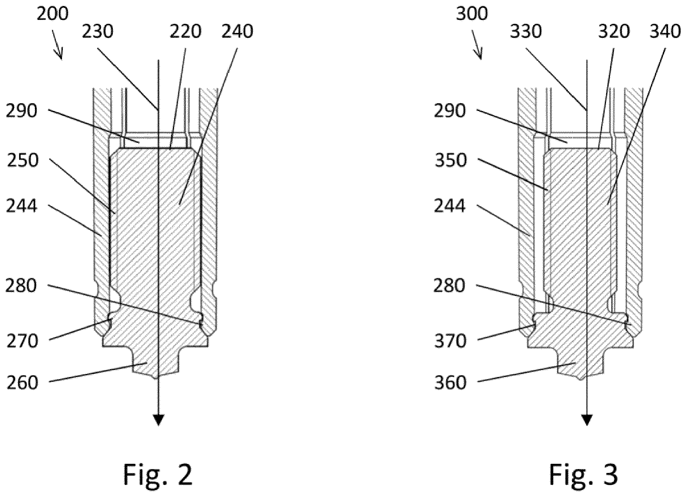

Figure 2 illustrates a welding assembly 200 with an article of manufacture, or welding stud 220 and a stud holder 244. The welding stud 220 has a shank 240, which defines a longitudinal direction 230 and which is provided with an attachment means 250 designed as an external thread, a welding region 260 at the end, which is provided for liquefaction during a welding process, and a holding means 270, which is designed as a depression, preferably a groove, running around in a circle, and which is arranged between the welding region 260 and the attachment means 250 in the longitudinal direction 230. The stud holder 244 has a holding device 280, which is designed as a projection which runs around in a circle and with which the holding means 270 is in engagement in order to hold the welding stud 220 during a welding process, e.g. using the welding device 10 (Fig. 1).

The stud holder 244 is part of a welding gun (not shown specifically) for welding the welding stud 220 to a substrate, which is of similar design to the welding gun 40 (Fig. 1), for example. The holding device 280 is arranged at a front end of the welding gun, with the result that the welding stud 220 is moved forward toward the substrate when the stud holder 244 is moved forward by a stud immersing device, for example. Behind the holding device 280, the welding gun, in particular the stud holder 244, has a socket 290, designed substantially as a cavity, for the attachment means 250 of the welding stud. By means of this arrangement, on the one hand, the attachment means 250 is protected from damage by the holding device 280 and, on the other hand, it is ensured that the holding device 280 holds the welding stud in the desired position, irrespective of a length of the shank 240 thereof and/or of the attachment means 250. Moreover, it is possible to use a single stud holder for welding studs with different attachment means, in particular attachment means of different sizes.

Figure 3 illustrates a second welding assembly 300 having a second welding stud 320 and the stud holder 244 from Fig. 2. The second welding stud 320 likewise has a shank 340, which defines a longitudinal direction 330 and which is provided with an attachment means 350 designed as an external thread, a welding region 360 at the end, which is provided for liquefaction during a welding process, and a second holding means 370, which is designed as a recess that runs around in a circle, is arranged between the welding region 360 and the attachment means 350 in the longitudinal direction 330 and has the same shape and the same dimensions as the holding means 270 of the welding stud 220 shown in Fig. 2.

The attachment means 350 of welding stud 320 has a smaller diameter than the attachment means 250 of welding stud 220 and is therefore likewise received in the socket 290 when welding stud 350 is held by the holding device 280 in engagement with the holding means 370. Welding stud 220 and the second welding stud 320 are thus part of a fastening system according to this application. Here, the welding region 260 of welding stud 220 is the same as the welding region 360 of the second welding stud 320 in shape and dimensions. This makes it possible to weld welding studs with different attachment means, in particular attachment means of different sizes, to the substrate using the same welding parameters, such as welding current intensity, electric voltage, welding current duration and the like.

The invention has been described on the basis of examples of a system for fastening a first item to a second item and of a welding gun. In this case, the features of the described embodiments can also be combined as desired with one another within a single fastening device. It should be noted that the device according to the invention is also suitable for other purposes.

The article of manufacture is made from a steel alloy consisting essentially of
0 - 0.03 % carbon,
0.5 - 0.75 % silicon,
0 - 2 % manganese,
0 - 0.045 % phosphorous,
0 - 0.012 % sulfur,
16 - 18 % chromium,
2.0 - 2.5 % molybdenum,
10 - 14 % nickel,
0 - 0.1 % nitrogen,
0.2 - 0.7 % titanium,
the balance being iron and impurities, and incidental amounts of residual elements. In particular, the whole welding stud 200, 300 may consist of the steel alloy proposed above. Alternatively, the welding region 260, 360 may consist of the steel alloy proposed above, and the remainder of the welding stud 200, 300 may comprise a different material, e.g. a steel containing a lower amount of silicon and/or titanium. In another embodiment, a pellet or like element consisting of the steel alloy may be added to a semi-finished welding stud consisting of a different material, in particular in the welding region. In still another embodiment, a surface layer, such as a coating, consisting of the steel alloy may be added to a semi-finished welding stud consisting of a different material, in particular in the welding region.

The foregoing exemplary embodiments of the invention have been presented for purposes of illustration and of description. It is not intended to be exhaustive or to limit the invention to the precise form disclosed, and modifications and variations are possible in light of the above teachings or may be acquired from practice of the invention. The functionality described may be distributed among modules that differ in number and distribution of functionality from those described herein. Additionally, the order of execution of the functions may be changed depending on the embodiment. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto and their equivalents.

## Claims

1. A steel alloy consisting essentially of
- 0 - 0.08 % carbon,
- 0 -1 % silicon,
- 0 - 2 % manganese,
- 0 - 0.045 % phosphorous,
- 0 - 0.03 % sulfur,
- 16 - 20 % chromium,
- 2.0 - 3.0 % molybdenum,
- 8 - 14 % nickel,
- 0 - 0.1 % nitrogen,
- 0 - 0.7 % titanium,
- the balance being iron and impurities, and incidental amounts of residual elements.

2. The steel alloy according to claim 1, wherein the amount of silicon and the amount of titanium add to at least 0.5 %.

3. The steel alloy according to claim 2, wherein the amount of silicon and the amount of titanium add to at least 0.5 % more than the amount of carbon.

4. The steel alloy according to any of the preceding claims, containing 0 - 0.03 % carbon.

5. The steel alloy according to any of the preceding claims, containing 0.5 - 0.75 % silicon.

6. The steel alloy according to any of the preceding claims, containing 0 - 0.012 % sulfur.

7. The steel alloy according to any of the preceding claims, containing 16 - 18 % chromium.

8. The steel alloy according to any of the preceding claims, containing 2.0 - 2.5 % molybdenum.

9. The steel alloy according to any of the preceding claims, containing 10 - 14 % nickel.

10. The steel alloy according to any of the preceding claims, containing 0.2 - 0.7 % titanium.

11. An article of manufacture made from a steel alloy according to any of the preceding claims.

12. The article of manufacture according to claim 11, wherein a bulk material of the article consists of the steel alloy.

13. The article of manufacture according to any of claims 11 to 12, wherein a surface layer, or coating of the article consists of the steel alloy.

14. The article of manufacture according to any of claims 11 to 13, wherein the article is a fastening element, or a welding stud.

15. A method for welding a welding stud to a base material, the method comprising
a) providing a welding stud according to claim 14,
b) applying a welding current to the welding stud between the welding stud and the base material,
c) partially liquefying a material of the welding stud and/or the base material,
d) allowing the liquefied material of the welding stud and/or of the base material to solidify
e) immersing the welding stud into the liquefied material of the welding stud and/or of the base material before the liquid material solidifies.
